**Europäisches Patentamt**

(19) **European Patent Office**

**Office européen des brevets**

(11) Publication number : **0 328 225 B1**

## EUROPEAN PATENT SPECIFICATION

(45) Date of publication of patent specification :
**30.09.92 Bulletin 92/40**

(51) Int. Cl.⁵ : **B32B 3/08,** B32B 27/06,
G06K 11/06, B32B 27/30

(21) Application number : **89200316.1**

(22) Date of filing : **10.02.89**

(54) **Computer mouse mat.**

(30) Priority : **12.02.88 NL 8800348**

(73) Proprietor : **KUPACK PLASTICS V.O.F.**
**Da Costalaan 27**
**NL-3743 HT Baarn (NL)**

(43) Date of publication of application :
**16.08.89 Bulletin 89/33**

(72) Inventor : **Kuipers, Jurjen**
**Da Costalaan 27**
**NL-3743 HT Baarn (NL)**

(45) Publication of the grant of the patent :
**30.09.92 Bulletin 92/40**

(74) Representative : **van 't Holt, Henk**
**Patent Attorney/Octrooigemachtigde**
**Churchilllaan 30**
**NL-5224 BV 's-Hertogenbosch (NL)**

(84) Designated Contracting States :
**AT BE CH DE ES FR GB LI NL**

(56) References cited :
**US-A- 4 363 071**

## Description

Computer mouse pad.

The invention relates to a computer mouse pad or mat and more particularly to a pad or mat composed of layers.

A great number of such computer mouse pads of various materials have been proposed, consisting either of a flat layer of a crease-resistant kind of rubber that keeps its shape or of a composite layer, of which pad the botton surface is an anti-slip layer.

A drawback of these pads was that on use of the computer pad the upper layer got a static charge or that the price of the used rubber was relatively high. Moreover the upper surface of most of the pads in use at present was dented.

It is an object of the invention to provide a cheaper computer mouse pad with better use characteristics.

It was surprisingly found that this object could be achieved by the mouse pad being composed of at least the following layers:

a) a non-static polyvinylchloride upper layer having a thickness in the range of from 0.20 to o.80 mm, preferably from 0.30 to 0.60 mm, the top surface of said layer having a soft suède-like structure;

(The soft, suède-like structure can be obtained by flocking a thermoplastic anti-static fibre not consisting of polyvinylchloride onto a polyvinylchloride base sheet containing a plasticizer. The base sheet preferably consists of polyvinylchloride, plasticizer and the usual stabilizers, pigments, auxiliaries, and the flocked fibre consists of a different plastic such as for example polypropylene.)

b) a crease-resistant plastic layer that keeps its shape, preferably consisting of a sheet or plate of polyvinylchloride or propylene containing a plasticizer and having a thickness in the range of from 0.75 to 1.50 mm, preferably from 0.85 to 1.20 mm, said layer returning fast to the plane form after bending;

c) a bottom layer functioning as an anti-slip layer in contact with a ground in the form of a working-table-top, desk-top and the like and consisting of foamed thermoplastic synthetic material, said bottom layer having a thickness in the range of from 0.5-2 mm.

As bottom layer preferably a soft thermoplastic polyvinylchloride foam layer is used.

The computer mouse pad thus composed can be prepared in a simple way by a variety of known methods, e.g. by welding together the above-mentioned composing layers a) to and inclusive c) at the periphery of the mouse pad by means of fast local high frequency heating while pressing. Preferably the welding is performed in a single integrated operation including also the cutting and punching of the required area of the pad.

According to an alternative method the layers can be combined e.g. by gluing, sticking or luting, followed by cutting or punching, preferably in a single operation.

Welding together of the layers along the periphery of the pad combined with punching or cutting out of the pad in a single operation is preferred.

Use of a polyvinylchloride sheet of the type such as Draka Polva Tudor[R] as the layer a) is particularly preferred.

Use of a laminated polyvinylchloride sheet or plate containing plasticizer and having a thickness of 0.75-1.5 mm and being composed of two or more sheets consisting of polyvinylchloride, plasticizer, pigments and the usual auxiliaries is particularly preferred as the layer b).

It will be clear that the computer mouse pad according to the invention can also be obtained by starting from commercially available systems of two layers of plastic materials consisting of two of said three plastic layers. More particularly the use of a system of two layers already attached to each other and composed of the layers b) and c) mentioned hereinbefore, such as Draka Polva Xousmain[R], is most preferred. Such systems have been built up from a laminated polyvinylchloride sheet or plate containing plasticizer, consisting of two or more sheets glued together and each consisting of polyvinylchloride, plasticizer, pigments and the usual auxiliaries, onto which a layer of thermoplastic foam has been fastened.

The dimensions of the computer mouse pad according to the invention can in principle be varied dependent on the specific use. Preferably the mouse pad has the form of a rectangle with a length of 20-50 cm and a breadth of 15-35 cm and more preferably with a length of 25-30 cm and a breadth of 20-25 cm.

The advantages of the computer mouse pad according to the invention are formed by the use of cheap, commercially readily available plastic materials which moreover on use of the computer mouse give to the pad a properly sufficient harshness and firmness without shifting over the table-top or building up static electricity, even not on prolonged use. Moreover the pad is lying permanently flat.

The invention is illustrated in detail by the following example, however without restricting the invention to this specific embodiment.

## EXAMPLE.

A computer mouse pad of 28 x 22 cm was made by welding together and cutting out a system of sheets consisting of

a) a plasticized polyvinylchloride sheet having a thickness of 0.28 mm and consisting of polyvinylchloride, plasticizer, the usual stabilizers for this plastic, pigments and auxiliary materials, onto which sheet a thermoplastic, anti-static fibre not consisting of polyvinylchloride has been flocked (make: Draka Polva Tudor[R] sheet);
b) a laminated polyvinylchloride sheet containing plasticizer and consisting of two layers of polyvinylchloride sheet containing plasticizer, pigments and the usual auxiliary materials and onto which a thermoplastic foam has been glued (Draka Polva Xousmain[R]).

The computer mouse pad thus obtained did not show after prolonged use (> 10 hours) any static charge and retained the form of a flat plate.

## Claims

1. Computer mouse pad or mat, characterized in that it is composed of at least the following layers:
   a) a non-static polyvinylchloride upper layer having a thickness in the range of from 0.20 to 0.80 mm, preferably from 0.30 to 0.60 mm, the top surface of said layer having a soft, suède-like structure;
   b) a crease-resistant plastic layer that keeps its shape, has a thickness in the range of from 0.75 to 1.5 mm, preferably from 0.85 to 1.2 mm, and after bending returns fast to the plane form;
   c) a bottom layer functioning as an anti-slip layer when in contact with a ground in the form of a working-table-top, desk-top and the like and consisting of a foamed thermoplastic synthetic material, said bottom layer having a thickness in the range of from 0.5 to 2 mm.

2. Computer mouse pad according to claim 1, characterized in that the upper layer a) has a top-surface obtained by flocking an anti-static thermoplastic fibre not consisting of polyvinylchloride onto a polyvinylchloride base sheet containing a plasticizer.

3. Computer mouse pad according to claim 1 or 2, characterized in that the upper layer a) consists of polyvinylchloride, plasticizer and the usual stabilizers, pigments and auxiliary materials.

4. Computer mouse pad according to claim 1-3, characterized in that it is obtained by welding together the layers along the periphery of the pad in combination with punching or cutting out of the pad in a single integrated operation.

5. Computer mouse pad according to claim 1-4, characterized in that a laminated polyvinylchloride sheet or plate containing a plasticizer is used as layer b), said layer being composed of two or more sheets consisting of polyvinylchloride, plasticizer, pigments and the usual auxiliary substances.

6. Computer mouse pad according to claim 1-5, characterized in that it is built up of an upper layer a) and a system of two layers consisting of layers b) and c) already attached to each other.

7. Computer mouse pad according to claim 1-6, characterized in that it has the form of a rectangle with a length of 20-50 cm, preferably 25-30 cm, and a breadth of 15-35 cm, preferably 20-25 cm.

## Patentansprüche

1. Kissen für eine Komputermaus, dadurch gekennzeichnet, dass diese zusammengesetzt ist aus mindestens den folgenden Schichten:
   a) einer nicht-statischen Polyvinylchloridoberschicht mit einer Dicke in dem Gebiet von 0,20 bis 0,80 mm, vorzügsweise von 0,30 bis 0,60 mm, wobei die Oberfläche der genannten Schicht eine sanfte suède-artige Struktur hat;
   b) einer knittererholenden Plastikschicht die formfest ist, eine Dicke hat in dem Gebiet von 0,75 bis 1,5 mm, vorzugsweise von 0,85 bis 1,2 mm, und nach Biegung schnell zurückkehrt in der Flachform;
   c) einer Unterschicht die funktioniert als eine Antirutschschicht wenn in Kontakt mit einem Boden in der Form einer Arbeitstischplatte, Schreibtischplatte und dergleichen und besteht aus einem geschäumten thermoplastischen synthetischen Material, wobei die genannte Unterschicht eine Dicke hat in dem Gebiet von 0,5 bis 2 mm.

2. Kissen für eine Komputermaus nach Anspruch 1, dadurch gekennzeichnet, dass die Oberschicht a) eine Oberfläche aufweist die angefertigt worden ist durch Flockung von antistatischen, nicht aus Polyvinylchlorid bestehenden, thermoplastischen Fasern auf eine ein Weichmachungsmittel enthaltende Polyvinylchloridgrundplatte.

3. Kissen für eine Komputermaus nach Anspruch 1 oder 2, dadurch gekennzeichnet, dass die Oberschicht a) aus Polyvinylchlorid, Weichmachungsmittel und die üblichen Stabilisierungsmittel, Pigmente und Hilfsmittel besteht.

4. Kissen für eine Komputermaus nach Anspruch 1 - 3, dadurch gekennzeichnet, dass diese erhalten worden ist durch Zusammenschweissung der Schichte an der Peripherie des Kissens entlang in Kombination mit Stanzen oder Ausschneiden des Kissens in einer einzigen integrierten Operation.

5. Kissen für eine Komputermaus nach Anspruch 1 - 4, dadurch gekennzeichnet, dass eine laminierte, Weichmachungsmittel enthaltende Polyvinylchloridplatte als Schicht b) angewendet wird, wobei genannte Schicht aus zwei oder mehr aus Polyvinylchlorid, Weichmachungsmittel, Pigmente und den üblichen Hilfsmittel zusammemgesetzten Platten besteht.

6. Kissen für eine Komputermaus nach Anspruch 1 - 5, dadurch gekennzeichnet, dass diese aufgebaut worden ist aus einer Oberschicht a) und einem System von zwei Schichten b) und c) die bereits aneinander befestigt sind.

7. Kissen für eine Komputermaus nach Anspruch 1 - 6, dadurch gekennzeichnet, dass diese die Form eines Rechtecks hat mit einer Länge von 20 - 50 cm, vorzügsweise 25 - 30 cm, und einer Breite von 15 - 35 cm, vorzügsweise 20 - 25 cm.

**Revendications**

1. Sous-main pour une souris d'ordinateur, caractérisé en ce qu'il est composé d'au moins les couches suivantes:

a) une couche supérieure non-statique en chlorure polyvinylique, ayant une épaisseur dans le domaine de 0,20 à 0.80 mm, de préférence de 0,30 à 0,60 mm, la surface de ladite couche ayant une structure douce et suèdeuse;

b) une couche plastique infroissable qui maintient sa forme et qui a une épaisseur dans le domaine de 0,75 à 1,5 mm, de préférence de 0,85 à 1,2 mm, et après pliage retourne promptement à la forme plate;

c) une couche inférieure qui fonctionne comme une couche antidérapante en rentrant en contact avec un fond en forme d'un dessus de table de travail, un dessus de bureau et autres dessus de ce genre, et consiste en un materiel synthétique thermoplastique mousse, ladite couche inférieure ayant une épaisseur dans le domaine de 0,5 à 2 mm.

2. Sous-main pour une souris d'ordinateur selon la revendication 1, caractérisé en ce que la couche supérieure a) a une surface obtenu par flocconage d'une fibre antistatique thermoplastique, qui ne consiste pas en chlorure polyvinylique, sur une feuille de chlorure polyvinylique contenant un plastifiant.

3. Sous-main pour une souris d'ordinateur selon la revendication 1 ou 2, caractérisé en ce que la couche supérieure a) consiste en chlorure polyvinylique, plastifiant et les stabilisateurs, pigments et matériaux auxiliaires usuels.

4. Sous-main pour une souris d'ordinateur selon une des revendications 1 à 3, caractérisé en ce qu'il est obtenu par jonction des couches le long la périphérie du sous-main en combinaison avec poinconnage ou coupage du sous-main en une opération simple integrée.

5. Sous-main pour une souris d'ordinateur selon une des revendications 1 à 4, caractérisé en ce qu'une feuille ou plaque en chlorure polyvinylique stratifiée contenant un plastifiant est employé comme la couche b), ladite couche se composant en deux ou plusieures feuilles consistant en chlorure polyvinylique, plastifiant, pigments et les substances auxiliaires usuelles.

6. Sous-main pour une souris d'ordinateur selon une des revendications 1 à 5, caractérisé en ce qu'il est construit d'une couche supérieure a) et un système de deux couches qui consiste en des couches b) et c) déjà fixée l'une à l'autre.

7. Sous-main pour une souris d'ordinateur selon une des revendications 1 à 6, caractérisé en ce qu'il a la forme d'un rectangle avec une longueur de 20 à 50 cm, de préférence de 25 à 30 cm, et une largeur de 15 à 35 cm, de préférence de 20 à 25 cm.